# FASCICULE DE BREVET EUROPEEN

(11) **EP 1 300 477 B1**
(45) Date de publication et mention de la délivrance du brevet: **03.01.2007**
(21) Numéro de dépôt: 02447142.7
(22) Date de dépôt: 23.07.2002
(51) Int. Cl.: C21D 9/573, C21D 1/60, C23C 8/18

(54) **Procédé de recuit continu pour l'obtention d'un état de surface améliorée**
Durchlaufglühverfahren zum Erzeugen einer verbesserten Oberflächenerscheinung
Continuous annealing process for obtaining an improved surface appearance

(30) Priorité: 05.10.2001 BE 200100652
(43) Date de publication de la demande: 09.04.2003
(73) Titulaire: Centre de Recherches Metallurgiques - Centrum voor de Research in de Metallurgie, 1200 Bruxelles (BE); RECHERCHE ET DEVELOPPEMENT DU GROUPE COCKERILL SAMBRE, en abrégé: RD-CS, 4000 Liège (BE)
(72) Inventeur: Crahay Jean, B-4970 Francorchamps (BE); Fouarge Andre, B-4000 Liege (BE); Tusset Vittorino, B-4680 Oupeye (BE); Willem Jean-Francois, B-4680 Oupeye (BE)
(74) Mandataire: pronovem

(56) Documents cités:
- BE-A- 846 024
- DE-A- 2 536 446
- DE-A- 19 637 916
- GB-A- 1 447 335
- PATENT ABSTRACTS OF JAPAN vol. 016, no. 531 (M-1333), 30 octobre 1992 (1992-10-30) & JP 04 198403 A (NKK CORP), 17 juillet 1992 (1992-07-17)

## Description

### Objet de l'invention

La présente invention se rapporte à un nouveau procédé pour l'obtention d'un état de surface de qualité contrôlée dans le processus de recuit continu.

### Arrière-plan technologique et position du problème

### Le cadre général: le recuit continu

Le recuit continu est un traitement essentiellement thermique que l'on applique aux bandes d'acier après le laminage à froid. La "bande" d'acier est le produit sidérurgique qui, une fois découpé, donne des tôles utilisées pour la fabrication des carrosseries automobiles, des carcasses d'appareils électroménagers, etc.

Le procédé de recuit continu consiste à faire défiler la bande d'acier dans un four où elle est exposée à un chauffage et à un refroidissement contrôlés. Dans le four de recuit continu, la bande d'acier circule verticalement, en une série de brins successifs, montants et descendants, et défile ainsi séquentiellement au travers des diverses étapes de traitement.

Le four est un dispositif de grande dimension : la longueur totale de bande traitée dans le four est couramment proche de 1 kilomètre ; les vitesses de traitement sont telles (> 100 m/min) que chaque portion de la bande est traitée en quelques minutes.

Le traitement de la bande dans le four comprend généralement les étapes thermiques successives suivantes :
- préchauffage et chauffage : la bande atteint une température de 700 à 900 °C en 2 à 3 minutes ;
- maintien à la température maximale durant 1 minute environ ;
- refroidissement lent, par exemple à l'eau bouillante ;
- refroidissement rapide (trempe), par exemple par eau à l'état liquide projetée sur la tôle à une température de 30 à 50 °C, voire 100 °C ;
- survieillissement destiné à produire des tôles aux propriétés mécaniques très stables au cours du temps;
- refroidissement final jusqu'à 60 °C.

Ces différentes étapes sont nécessaires pour le traitement métallurgique visé, à savoir recristallisation, précipitation des carbures, obtention des structures finales, acier non vieillissant, etc.

### Importance du refroidissement pour les propriétés des aciers après recuit continu

Parmi les différentes étapes du recuit continu, le refroidissement lent puis rapide a une importance particulière. En effet, les propriétés de résistance mécanique finales des tôles dépendent essentiellement de deux facteurs:
- la composition chimique des aciers ;
- la vitesse de refroidissement lors du recuit.

Or la tendance actuelle est de produire des tôles en acier de résistance plus élevée, spécialement destinées à la construction automobile, par exemple pour réaliser des pièces de protection de l'habitacle ou atteindre des réductions de poids et donc de consommation.

En conséquence, pour atteindre cet objectif de haute résistance, le sidérurgiste peut agir, soit sur la composition chimique, soit sur la vitesse de refroidissement ; on observe que cette seconde filière est la plus économique car elle permet d'atteindre des résistances élevées sur base de compositions peu chargées en éléments d'alliage, donc bon marché. C'est le cas par exemple des aciers dits "dual-phases", "TRIP" (Transformation Induced Plasticity), etc.

Différents media de refroidissement sont utilisés:
- refroidissement par gaz "froid" projeté sur la bande ;
- contact avec des rouleaux refroidis ;
- refroidissement par contact avec l'eau : cette technique permet les vitesses de refroidissement les plus élevées (1000 à 1500 °C/s pour une bande de 0,8 mm contre 100 à 150 °C/s pour les refroidissements à gaz les plus modernes).

### Le traitement de la surface en recuit continu

Le recuit continu a également comme objectif de créer un état de surface apte aux opérations de mise en oeuvre ultérieures (revêtement, peinture, ..).

De façon à obtenir cet état de surface favorable,
- tout d'abord, le recuit est effectué dans une atmosphère contrôlée comprenant un gaz réducteur, le plus souvent un mélange d'azote et d'hydrogène ;
- ensuite, si la bande d'acier a été refroidie au moyen d'eau, sous forme de bain, de jets ou de brouillard par exemple, un décapage est effectué en fin de recuit afin d'enlever la couche d'oxyde créée par le contact entre l'acier et l'eau.

### Enjeux d'un état de surface amélioré

Il faut ici différencier les recuits continus mettant en oeuvre de l'eau (sous quelque forme que ce soit) et ceux où le refroidissement est basé sur du gaz ou sur un contact avec un rouleau de refroidissement. L'utilisation de la filière "aqueuse" est inévitablement liée à l'oxydation de la surface et le plus souvent à l'application d'un décapage final. Dans la suite de cette description, on se limite uniquement au cas de recuit continu utilisant un refroidissement à eau, avec une teneur en additifs éventuels inférieure à 1 %.

Dans ce cas, étant donné que la surface de la bande est inévitablement oxydée, l'enjeu revient à obtenir au terme du refroidissement un état de surface caractérisé par un revêtement d'oxyde de fer qui soit :
- homogène, ce qui permet de mener de façon très reproductible le traitement de survieillissement. En effet, le survieillissement qui est effectué après le refroidissement met en jeu un chauffage par rayonnement dans un four ; toute variation de la qualité de l'oxyde induit alors une variation de l'absorption du rayonnement et rend donc la conduite du four plus difficile ;
- facile à décaper : un décapage étant le plus souvent prévu en fin de traitement, une surface de qualité doit pouvoir se décaper facilement. En particulier, certains aciers spéciaux au silicium ou manganèse ont tendance à présenter une oxydation de ces éléments chimiques rapide_et plus difficile à enlever que les oxydes de fer. En outre, certains producteurs ont introduit des décapages avec des acides organiques comme l'acide formique ; ces acides organiques sont caractérisés par une "constante de dissociation" pKa qui, dans les cas intéressant la présente demande de brevet, est supérieure à 2 (valeur à 298 K) ; ces décapages organiques confèrent des propriétés exceptionnelles mais supposent un ou plusieurs oxydes spécifiques ;
- à état de surface brillant en fin de traitement (c'est-à-dire après recuit et décapage);
- mince et adhérent, ce qui réduit le risque de "pick-up" sur les rouleaux du four. En effet, il est connu que, si l'oxyde présent à la surface des bandes n'est pas de bonne qualité, il risque de se décoller de la bande et d'adhérer à certains rouleaux, y créant des surépaisseurs qui vont à leur tour s'imprimer dans la bande et produire des défauts de surface dont la taille est de l'ordre de 0,1 mm et qui sont bien souvent considérés actuellement comme rédhibitoires. Un autre avantage potentiel lié à un oxyde mince et adhérent est la possibilité de ne pas décaper la bande dans certains cas si on peut tirer parti de qualités d'accrochage, d'isolation ou d'absorption de la surface oxydée.

### Etat de la technique

A ce jour, on a essayé de répondre aux objectifs ci-dessus mais ces tentatives ne se sont pas avérées satisfaisantes.

Tout d'abord, différentes techniques ont été proposées pour éviter de créer une couche d'oxyde trop épaisse ; ces techniques demeurent cependant spécifiques, coûteuses et d'efficacité limitée. Pour citer quelques-unes d'entre elles :
- utilisation d'eau de refroidissement désaérée, ce qui est très lourd étant donné les débits importants à mettre en oeuvre dans une ligne de recuit industrielle (de l'ordre de 1000 m³/h) ;
- ajout d'additifs aux liquides de refroidissement, avec les questions de gestion chimique que cette technique soulève ;
- refroidissement par une alternance de jets de gaz et de jets d'eau ;
- application d'un revêtement électrolytique de fer avant réalisation du recuit.

Ensuite, des techniques de décapage compliquées ont dû être mises en oeuvre pour enlever l'oxyde et conférer à la bande des propriétés de surface convenables. Parmi ces techniques sophistiquées, on peut citer :
- décapage couplé à un dépôt électrolytique ;
- traitement de recuit en deux phases séparées par un décapage, ce qui entraîne un gaspillage important d'énergie car on doit chauffer la bande, ensuite la refroidir jusqu'à température de décapage et enfin la réchauffer à nouveau pour la fin du traitement thermique ;
- lavage en fin de traitement pour obtenir un meilleur état de surface ; en particulier le lavage des rouleaux de la décaperie est nécessaire dans la mesure où des particules portées par la bande sont déposées dans les bacs.

### Buts de l'invention

La présente invention vise à s'affranchir des inconvénients inhérents à l'état de la technique.

La présente invention vise plus précisément à créer un film d'oxyde mince, régulier, adhérent et facile à décaper, afin de produire un état de surface de qualité contrôlée dans le processus de recuit continu.

En particulier, cette invention est destinée à être appliquée :
- dans le cas des aciers spéciaux ou à haute résistance traités en recuit continu ;
- dans le cas d'un décapage à l'aide d'un acide faible c'est-à-dire de constante de dissociation pKa supérieure à 2 (valeur à 298 K).

### Principaux éléments caractéristiques de l'invention

La présente invention se rapporte à un procédé de traitement thermique en continu d'une tôle d'acier, de préférence de recuit continu, dans lequel on soumet ladite tôle à au moins une étape de refroidissement scindée en au moins les deux sous-étapes successives suivantes :
- au début du refroidissement, lorsque la tôle est encore à haute température, comprise entre 400 et 900 °C, et de préférence entre 600 et 900 °C, on provoque un contact direct de ladite tôle avec de la vapeur d'eau pour créer sur la tôle une première couche d'oxyde(s) de fer FeₓO_{y} de composition spécifiée et contrôlée telle que le rapport entre les teneurs massiques en éléments [Fe] et [O] de la composition moyenne d'oxyde FeₓO_{y} soit compris entre 3 et 3,5, l'épaisseur de ladite couche étant comprise entre 10 et 100 nm, et de préférence entre 20 et 50 nm ;
- on expose ensuite la tôle directement à de l'eau à l'état liquide, ce qui conduit à la formation d'une deuxième couche d'oxyde(s) de fer, pouvant comprendre des oxydes de type Fe₃O₄ et Fe₂O₃.

Avantageusement, la vapeur d'eau est maintenue à une température comprise entre 100 et 500 °C et contient moins de 50 ppm d'oxygène.

De manière particulièrement avantageuse, la couche d'oxyde(s) FeₓO_{y}, dont la composition est contrôlée, est modifiée et régulée avec précision en variant le temps d'exposition de la tôle à la vapeur d'eau.

De préférence, la vapeur d'eau est créée soit par un générateur de vapeur et projetée sur la tôle au moyen ou non d'un gaz propulseur dont la teneur en oxygène est également inférieure à 50 ppm, soit en continu par contact de la tôle chaude avec de l'eau à l'état liquide proche de l'évaporation.

La tôle utilisée dans le cadre de l'invention est de préférence en acier à haute résistance mécanique, de préférence un acier multiphasé tel que acier "TRIP" ou de type "dual-phases".

Selon une modalité de réalisation préférentielle de l'invention, la tôle est exposée à la vapeur d'eau pendant une durée allant de 4 à 12 secondes, la vitesse de défilement de la tôle est comprise entre 2 et 10 m/s, l'épaisseur de la tôle est comprise de préférence entre 0,15 et 2 mm.

Toujours selon l'invention, la vitesse maximale de refroidissement de la tôle après exposition à la vapeur d'eau est comprise entre 1000 et 1500 °C/s.

Avantageusement, suite à l'étape de refroidissement, la tôle est soumise à au moins une étape de survieillissement dans un four où elle est chauffée par rayonnement.

Selon une autre caractéristique de l'invention, la tôle peut être utilisée sans être décapée ou, suite à l'étape de refroidissement, la tôle est soumise à au moins une étape de décapage.

L'invention permet de manière particulièrement avantageuse la mise en oeuvre d'un décapage réalisé au moyen d'un acide faible, de préférence un acide organique de constante de dissociation pKa supérieure à 2 (valeur à 298 K).

Un dispositif pour la mise en oeuvre d'un procédé de traitement thermique en continu d'une tôle d'acier, de préférence de recuit continu, comprend des moyens pour mettre en contact direct de la vapeur d'eau avec la tôle, lorsque la tôle est encore à haute température, de préférence entre 600 et 900 °C, de manière à créer sur la tôle une première couche d'oxyde(s) de fer FeₓO_{y} de composition spécifiée et contrôlée. Ce dispositif comporte également des moyens pour exposer ensuite la tôle à de l'eau à l'état liquide, de manière à former sur ladite première couche d'oxyde(s) une deuxième couche d'oxyde(s) de fer ou encore d'autres oxydes métalliques.

Le dispositif de l'invention permet avantageusement de produire une couche de FeₓO_{y} dont l'épaisseur est comprise entre 10 et 100 nm, et de préférence entre 20 et 50 nm.

### Description détaillée de l'invention

L'objet de l'invention est de créer un oxyde de qualité contrôlée à la surface des bandes d'acier traitées dans un recuit continu mettant en oeuvre de l'eau lors du refroidissement.

Cette méthode se distingue complètement de celles de l'état de la technique, qui visaient à limiter la formation ou à éliminer l'oxyde formé. Dans l'invention proposée ici, on veut au contraire créer un oxyde mais de qualité bien contrôlée. On vise en fait à créer une couche d'oxyde(s) de fer FeₓO_{y} caractérisée par :
- un rapport entre les teneurs en éléments [Fe] et [O] de la composition massique moyenne de l'oxyde FeₓO_{y} compris entre 3 et 3,5 ;
- une épaisseur comprise entre 20 et 100 nm, et de préférence entre 20 et 50 nm.

Pour créer ce film, on procède de la manière suivante. Au début du refroidissement, alors que la bande est encore à haute température, c'est-à-dire entre 600 °C et 900 °C selon les cas, on expose la bande à l'action directe de la vapeur d'eau, ce que par ailleurs on tentait d'éviter dans l'état de l'art. Cette vapeur d'eau possède les caractéristiques suivantes :
- température comprise entre 100 et 500 °C ;
- teneur en oxygène inférieure à 50 ppm.

Pour ce faire, deux techniques peuvent être utilisées :
- soit la projection de vapeur en provenance d'un générateur de vapeur ; cette projection a lieu avec ou sans gaz propulseur ; si un gaz propulseur est utilisé, il doit respecter la teneur maximum en oxygène spécifiée ci-dessus ;
- soit la création de vapeur continue en mettant la bande en contact avec de l'eau prête à s'évaporer.

Il est possible pour chaque vitesse de ligne de contrôler l'épaisseur du film d'oxyde en :
- évaluant l'épaisseur de la couche d'oxyde par modélisation, par évaluation basée sur la couleur et la température de la bande oxydée sur des mesures de type ellipsométrique (basées sur les modifications de la direction de polarisation) ;
- maintenant la bande plus ou moins longtemps exposée à la vapeur.

Lorsque le film de FeₓO_{y} de composition spécifiée a une épaisseur suffisante sur toute la surface, alors le contact avec de l'eau à l'état liquide est possible car les vitesses de croissance d'oxyde seront beaucoup plus faibles et même si un autre type d'oxyde était prêt à se créer il serait limité par:
- la couche d'oxyde déjà créé ;
- le temps de séjour très court conféré par la vitesse de refroidissement élevée.

Avant décapage, la tôle est donc revêtue d'une bi-couche d'oxyde constituée :
- d'une couche inférieure de FeₓO_{y}, résultant du traitement préalable à la vapeur et donc facile à décaper, par exemple au moyen d'acide organique de pKa supérieur à 2 (valeur à 298 K) ;
- et d'une couche supérieure d'oxydes formés par contact direct avec l'eau bouillante et lors de la trempe, tels que Fe₂O₃ ou Fe₃O₄, difficile à décaper.

### Résultats de laboratoire et tests industriels

Des tests en ligne pilote ont été effectués dans les conditions suivantes :
- section de bande : 0,5 x 250 mm ;
- vitesse de bande : environ 1 m/s ;
- bande exposée pendant 1 seconde à la vapeur d'eau puis refroidie à une vitesse de 1000 à 1500 °C/s.

Le décapage ne pose aucun problème, la surface finale est brillante. Les propriétés d'utilisation telles que par exemple l'aptitude à la phosphatation sont très bonnes.

Des tests industriels ont été pratiqués dans les conditions suivantes :
- section de bande : 0,5 à 1,0 mm x 600 à 1200 mm ;
- vitesse de bande : jusqu'à 4 m/s ;
- bande exposée à la vapeur d'eau pendant 4 secondes puis refroidie avec une vitesse allant jusqu'à 1000 °C/s.

Dans ces conditions, l'oxyde est fin et régulier, la conduite des fours est satisfaisante, il n'y a pas de pick-up et le décapage à l'acide formique, dont la constante de dissociation est 3,8 à 298 K, est facile et laisse un fini de surface brillant et apte aux traitements ultérieurs.

## Revendications

1. Procédé de traitement thermique en continu d'une tôle d'acier, de préférence de recuit continu, dans lequel on soumet ladite tôle à au moins une étape de refroidissement comprenant une sous-étape d'exposition de la tôle directement à de l'eau à l'état liquide, ce qui conduit à la formation d'une couche d'oxyde(s) de fer de type Fe₃O₄ et Fe₂O₃, **caractérisé en ce que** le procédé comporte au début du refroidissement, préalablement à ladite sous-étape, lorsque la tôle est encore à une température comprise entre 400 et 900°C, et de préférence entre 600 et 900 °C, une sous-étape intermédiaire dans laquelle on provoque un contact direct de ladite tôle avec de la vapeur d'eau pour créer entre la tôle et la couche d'oxyde(s) précitée, une couche intermédiaire d'oxyde(s) de fer FeₓO_{y} de composition spécifiée et contrôlée telle que le rapport entre les teneurs massiques en éléments [Fe] et [O] de la composition moyenne d'oxyde FeₓO_{y} soit compris entre 3 et 3,5, l'épaisseur de ladite couche étant comprise entre 10 et 100 nm, et de préférence entre 20 et 50 nm.

2. Procédé selon la revendication 1, **caractérisé en ce que** la vapeur d'eau est maintenue à une température comprise entre 100 et 500 °C.

3. Procédé selon la revendication 1 ou 2, **caractérisé en ce que** la vapeur d'eau contient moins de 50 ppm d'oxygène.

4. Procédé selon la revendication 1, 2 ou 3, **caractérisé en ce que** la couche d'oxyde(s) FeₓO_{y}, dont la composition est contrôlée, est modifiée et régulée avec précision en variant le temps d'exposition de la tôle à la vapeur d'eau.

5. Procédé selon l'une quelconque des revendications 1 à 4, **caractérisé en ce que** la vapeur d'eau est créée par un générateur de vapeur et projetée sur la tôle au moyen ou non d'un gaz propulseur, ledit gaz propulseur ayant une teneur en oxygène inférieure à 50 ppm.

6. Procédé selon l'une quelconque des revendications 1 à 4, **caractérisé en ce que** la vapeur d'eau est créée en continu par contact de la tôle chaude avec de l'eau liquide proche de l'évaporation.

7. Procédé selon l'une quelconque des revendications précédentes, **caractérisé en ce que** la tôle est exposée à la vapeur d'eau pendant une durée allant de 4 à 12 secondes.

8. Procédé selon l'une quelconque des revendications précédentes, **caractérisé en ce que** la tôle est en acier à haute résistance mécanique, de préférence un acier multiphasé tel que acier "TRIP" ou de type "dual-phases".

9. Procédé selon l'une quelconque des revendications précédentes, **caractérisé en ce que** la vitesse de défilement de la tôle est comprise entre 2 et 10 m/s.

10. Procédé selon l'une quelconque des revendications précédentes, **caractérisé en ce que** l'épaisseur de la tôle est comprise entre 0,15 et 2 mm.

11. Procédé selon l'une quelconque des revendications précédentes, **caractérisé en ce que** la vitesse maximale de refroidissement de la tôle après exposition à la vapeur d'eau est comprise entre 1000 et 1500 °C/s.

12. Procédé selon l'une quelconque des revendications précédentes, **caractérisé en ce que**, suite à l'étape de refroidissement, la tôle est soumise à au moins une étape de survieillissement dans un four où elle est chauffée par rayonnement.

13. Procédé selon l'une quelconque des revendications précédentes, **caractérisé en ce que** la tôle est utilisée sans être décapée.

14. Procédé selon l'un quelconque des revendications 1 à 12, **caractérisé en ce que**, suite à l'étape de refroidissement, la tôle est soumise à au moins une étape de décapage.

15. Procédé selon la revendication 14, **caractérisé en ce que** le décapage est réalisé au moyen d'un acide faible, de préférence un acide organique de constante de dissociation pKa supérieure à 2 (valeur à 298 K).

## Claims

1. Method for the continuous thermal processing of a steel sheet, preferably continuous annealing, in which said sheet is subjected to at least one cooling stage including a sub-stage of direct exposure of the sheet to water in a liquid state, which leads to the formation of a layer of iron oxide (s) of Fe₃O₄ and Fe₂O₃ types, **characterised in that** the process includes, at the beginning of cooling, prior to said sub-stage, when the sheet is still at a temperature between 400 and 900°C, and preferably between 600 and 900°C, an intermediate sub-stage in which said sheet is brought into direct contact with water steam so as to create between the sheet and the above-mentioned layer of oxide(s) an intermediate layer of FeₓO_{y} iron oxide(s) of specified and controlled composition such that the ratio between the mass contents of [Fe] and [O] of the average composition of the FeₓO_{y} oxide is between 3 and 3.5, the thickness of said layer being between 10 and 100nm, and preferably between 20 and 50nm.

2. Method according to Claim 1, **characterised in that** the water steam is maintained at a temperature between 100 and 500°C.

3. Method according to Claim 1 or 2, **characterised in that** the water steam comprises less than 50ppm of oxygen.

4. Method according to Claim 1, 2 or 3, **characterised in that** the layer of FeₓO_{y} oxide(s), with a controlled composition, is modified and precisely regulated by varying the time of exposure of the sheet to the water steam.

5. Method according to any one of Claims 1 to 4, **characterised in that** the water steam is created by a steam generator and sprayed onto the sheet with or without the aid of a propulsive gas, said propulsive gas having an oxygen content lower than 50ppm.

6. Method according to any one of Claims 1 to 4, **characterised in that** the water steam is continuously created by the contact of the hot sheet with liquid water close to evaporation point.

7. Method according to any one of the preceding claims, **characterised in that** the sheet is exposed to the water steam for a period between 4 and 12 seconds.

8. Method according to any one of the preceding claims, **characterised in that** the sheet is made of a steel with high mechanical resistance, preferably a multiphase steel such as "TRIP" steel or steel of a "dual phase" type.

9. Method according to any one of the preceding claims, **characterised in that** the motion speed of the sheet is between 2 and 10m/s.

10. Method according to any one of the preceding claims, **characterised in that** the thickness of the sheet is between 0.15 and 2mm.

11. Method according to any one of the preceding claims, **characterised in that** the maximum cooling rate of the sheet after exposure to the water steam is between 1,000 and 1,500°C/s.

12. Method according to any one of the preceding claims, **characterised in that**, following the cooling stage, the sheet is subjected to at least one overageing stage in a furnace where it is heated by radiation.

13. Method according to any one of the preceding claims, **characterised in that** the sheet is used without being stripped.

14. Method according to any one of Claims 1 to 12, **characterised in that**, following the cooling stage, the sheet is subjected to at least one stripping stage.

15. Method according to Claim 14, **characterised in that** the stripping is carried out by a weak acid, preferably an organic acid with a dissociation constant pKa higher than 2 (value at 298 K).

## Patentansprüche

1. Wärmebehandlungsverfahren eines Stahlblechs im Durchlaufverfahren, vorzugsweise Glühbehandlung im Durchlaufverfahren, bei der das besagte Blech wenigstens einer Kühlphase unterzogen wird, die eine Unterphase umfasst, bei der das Blech direkt Wasser in flüssigem Zustand ausgesetzt wird, was zur Bildung einer Eisenoxidschicht vom Typ Fe₃O₄ und Fe₂O₃ führt, **dadurch gekennzeichnet, dass** das Vefahren zu Beginn der Kühlung, vor der genannten Unterphase, wenn die Blechtemperatur noch zwischen 400 und 900 °C, vorzugsweise zwischen 600 und 900 °C beträgt, eine Zwischenphase umfasst, bei der ein direkter Kontakt des besagten Blechs mit Wasserdampf herbeigeführt wird, um zwischen dem Blech und der vorgenannten Oxidschicht eine Eisenoxidzwischenschicht FeₓO_{y} von spezifizierter und kontrollierter Zusammensetzung zu erzeugen, so dass das Verhältnis zwischen dem Massengehalt an den Elementen [Fe] und [O] der mittleren Oxidzusammensetzung FeₓO_{y} zwischen 3 und 3,5 beträgt, wobei die Dicke der besagten Schicht zwischen 10 und 100 nm, vorzugsweise zwischen 20 und 50 nm beträgt.

2. Verfahren nach Anspruch 1, **dadurch gekennzeichnet, dass** der Wasserdampf auf einer Temperatur zwischen 100 und 500 °C gehalten wird.

3. Verfahren nach Anspruch 1 oder 2, **dadurch gekennzeichnet, dass** der Wasserdampf weniger als 50 ppm Sauerstoff enthält.

4. Verfahren nach Anspruch 1, 2 oder 3, **dadurch gekennzeichnet, dass** die FeₓO_{y}-Oxidschicht, deren Zusammensetzung kontrolliert wird, mit Präzision verändert und eingestellt wird, indem die Wasserdampf-Expositionszeit des Blechs variiert wird.

5. Verfahren nach einem der Ansprüche 1 bis 4, **dadurch gekennzeichnet, dass** der Wasserdampf durch einen Dampferzeuger erzeugt wird und mittels eines Treibgases oder auch ohne auf das Blech gespritzt wird, wobei das besagte Treibgas einen Sauerstoffgehalt von unter 50 ppm hat.

6. Verfahren nach einem der Ansprüche 1 bis 4, **dadurch gekennzeichnet, dass** der Wasserdampf fortlaufend durch den Kontakt des heißen Blechs mit Wasser in flüssigem Zustand nahe des Verdampfungspunktes erzeugt wird.

7. Verfahren nach einem der vorstehenden Ansprüche, **dadurch gekennzeichnet, dass** das Blech dem Wasserdampf während einer Dauer von 4-12 Sekunden ausgesetzt wird.

8. Verfahren nach einem der vorstehenden Ansprüche, **dadurch gekennzeichnet, dass** das Blech aus Stahl mit hoher mechanischer Festigkeit besteht, vorzugsweise aus einem mehrphasigen Stahl wie "TRIP"-Stahl oder vom Typ "dual-phases".

9. Verfahren nach einem der vorstehenden Ansprüche, **dadurch gekennzeichnet, dass** die Durchlaufgeschwindigkeit des Blechs zwischen 2 und 10 m/s beträgt.

10. Verfahren nach einem der vorstehenden Ansprüche, **dadurch gekennzeichnet, dass** die Blechstärke vorzugsweise zwischen 0,15 und 2 mm beträgt.

11. Verfahren nach einem der vorstehenden Ansprüche, **dadurch gekennzeichnet, dass** die maximale Kühlgeschwindigkeit des Blechs nach der Wasserdampfexposition zwischen 1000 und 1500 °C/s beträgt.

12. Verfahren nach einem der vorstehenden Ansprüche, **dadurch gekennzeichnet, dass** das Blech nach der Kühlphase mindestens einer Überalterungsphase in einem Ofen unterzogen wird, wo es durch Strahlung erhitzt wird.

13. Verfahren nach einem der vorstehenden Ansprüche, **dadurch gekennzeichnet, dass** das Blech verwendet wird, ohne gebeizt zu werden.

14. Verfahren nach einem der Ansprüche 1 bis 12, **dadurch gekennzeichnet, dass** das Blech nach der Kühlphase mindestens einer Beizphase unterzogen wird.

15. Verfahren nach Anspruch 14, **dadurch gekennzeichnet, dass** das Beizen mittels einer schwachen Säure, vorzugsweise einer organischen Säure mit einer Dissoziationskonstante pKa von über 2 (Wert bei 298 K) durchgeführt wird.
